# EUROPEAN PATENT SPECIFICATION

(11) **EP 2 234 845 B1**
(45) Date of publication and mention of the grant of the patent: **21.08.2013**
(21) Application number: 08705367.4
(22) Date of filing: 28.01.2008
(51) Int. Cl.: B60R 21/013

(54) **A VEHICLE SAFETY SYSTEM**
FAHRZEUGSICHERHEITSSYSTEM
SYSTÈME DE SÉCURITÉ POUR AUTOMOBILE

(43) Date of publication of application: 06.10.2010
(73) Proprietor: Autoliv Development AB, 447 83 Vårgårda (SE); Ford Global Technologies, LLC, Dearborn, MI 48126 (US)
(72) Inventor: ERB, Yannick, F-95610 Eragny Sur Oise (FR); LE MERRER, Yann, F-75012 Paris (FR); HARDÅ, Peter, S-41324 Göteborg (SE); WALLIN, Andreas, S-42738 Billdal (SE)
(74) Representative: Beattie, Alex Thomas Stewart
(86) International application number: PCT/SE2008/050095
(87) International publication number: WO 2009/096827

(56) References cited:
- WO-A1-2005/118348
- WO-A1-2005/118348
- US-A1- 2006 190 176
- US-A1- 2006 267 748
- US-A1- 2006 267 748

## Description

THIS INVENTION relates to a vehicle safety system, and in particular concerns a system for protecting vehicle occupants during various types of crash situation.

Most vehicles are typically equipped with safety devices to protect vehicle occupants in the event of a side impact occurring. In general, in a sideways direction the distance between a vehicle occupant and the exterior of the vehicle is relatively small, since the sides of the vehicle are thin. It is therefore important that safety devices, such as internal side air-bags, which are adapted to protect occupants during side impacts, are activated at the earliest possible stage.

WO2005/118348 discloses a safety system for vehicle occupants according to the preambles of claims 1 and 10, having sensors for acquiring crash-relevant data such as acceleration and/or pressure values, having a control device, and having restraints, such as an air bag, safety belt, or the like. The safety system 1 has a connection to a navigation system of the vehicle. Data of the navigation system of the vehicle, such as in particular location data of the vehicle, are supplied to the safety system and are taken into account in a triggering decision for restraint.

US2006267748 discloses a method for preventing collisions of vehicles, in which first the surroundings of a vehicle and motion parameters of the vehicle are detected by means of sensors. From the output signals of the sensors, a failure-to-yield criterion and a collision risk criterion are derived. From a combination of the failure-to-yield criterion and the collision risk criterion, a risk level is ascertained. Depending on the particular risk level ascertained, finally, steps for reducing the risk of collision are initiated.

In some instances, it is possible to detect that a side impact is imminent, for instance by using radar or lidar detection, and to activate one or more appropriate vehicle safety systems before the impact has occurred. In other circumstances, impact sensors are used to detect side impacts, and hence deployment of the vehicle safety systems will not occur until the impact has actually happened.

Deployment of the safety systems will be controlled by an on-board processor, in accordance with a deployment algorithm. There are, however, competing priorities which must be taken into account when formulating the algorithm. On the one hand, as discussed above, the relevant side impact safety systems must be activated as swiftly as possible in the event of a crash situation occurring. On the other hand, the algorithm must be robust against "false positive" determinations, which could lead to the side impact safety systems being deployed unnecessarily. Such situations may include the door of a vehicle being slammed with above average force, and low-impact crashes that are unlikely to cause harm to vehicle occupants. It will therefore be understood that deployment algorithms are generally a compromise between these two competing priorities.

It is an object of the present invention to seek to provide an improved safety system of this type.

Accordingly, one aspect of the present invention provides a vehicle safety system comprising: at least one occupant safety device for protecting an occupant of the vehicle in the event of an impact of a predetermined type; and a control unit operable to receive information from one or more vehicle sensors and to provide a trigger signal to activate the occupant safety device, wherein: under normal driving conditions, a default deployment algorithm is used by the control unit to determine whether the trigger signal should be generated; and if it is determined that the vehicle is entering or crossing another driving lane, or is about to do so, the control unit employs a further deployment algorithm to determine whether the trigger signal should be generated, the further deployment algorithm being adapted to cause the trigger signal to be generated a shorter time after the initiation of an impact of the predetermined type than is the case for the default deployment algorithm; the sensors include sensors for measuring movement and/or control of the vehicle, and the control unit is operable to make a determination, from data output from these sensors, as to whether the vehicle is entering or crossing another driving lane, or is about to do so; the sensors operable to detect at least one of steering wheel angle, longitudinal speed, throttle angle, brake pressure and indicator status, or are able to determine whether the vehicle is involved in an understeer, oversteer or body slip situation; a determination will not be made that the vehicle is entering or crossing another driving lane if it is determined that the vehicle is undergoing an oversteer, understeer or body slip situation.

Advantageously, the occupant safety device is for protecting an occupant in the event of a side impact.

Preferably, the further deployment algorithm is employed if it is determined that the other driving lane crosses the driving lane along which the vehicle is travelling, or if it is determined that the driving lane along which the vehicle is travelling is entering the other driving lane.

Conveniently, the vehicle sensors include a positioning system, and, the positioning system is provided in conjunction with stored map data which contains information relating to the location of one or more mergings or crossing of driving lanes.

Preferably, the sensors include an imaging device, and the control unit is operable to recognise, from the data gathered by the imaging device, that the vehicle is entering or crossing another driving lane, or is about to do so, and the imaging device preferably comprises a camera.

Preferably, it will only be determined that the vehicle is entering or crossing another driving lane, or is about to do so, if the longitudinal speed of the vehicle is between upper and lower speed thresholds.

Advantageously, the lower speed threshold is about 5 to 10 km an hour, or the upper speed threshold is about 40 to 70 km an hour, or the upper speed threshold is about 50 km an hour.

Advantageously, the trigger signal is generated if a preset threshold is exceeded by a parameter derived from the impact sensor, the threshold being lowered or adapted in the further deployment algorithm, when compared to the default deployment algorithm, so that the further deployment algorithm is more sensitive to impacts.

Preferably, the impact sensor is an accelerometer, and the parameter derived from the sensor is integrated acceleration of the sensor.

Another aspect of the present invention provides a method of controlling an occupant safety device of a vehicle for protecting an occupant of the vehicle in the event of an impact of a predetermined type, the method comprising the steps of: receiving information from one or more vehicle sensors; and analysing the signals in accordance with a deployment algorithm and providing a trigger signal to activate the occupant safety device if it is determined that activation of the safety device is necessary, wherein: under normal driving conditions, a default deployment algorithm is employed to determine whether the trigger signal should be generated; and if it is determined that the vehicle is entering or crossing another driving lane, or is about to do so, employing a further deployment algorithm to determine whether the trigger signal should be generated, the further deployment algorithm being adapted to cause the trigger signal to be generated a shorter time after the initiation of an impact of the predetermined type than is the case for the default deployment algorithm; providing sensors for measuring movement and/or control of the vehicle, and a control unit is operable to make a determination, from data output from these sensors, as to whether the vehicle is entering or crossing another driving lane, or is about to do so; the sensors operable to detect at least one of steering wheel angle, longitudinal speed, throttle angle, brake pressure and indicator status, or are able to determine whether the vehicle is involved in an understeer, oversteer or body slip situation; the step of determining will not be made that the vehicle is entering or crossing another driving lane if it is determined that the vehicle is undergoing an oversteer, understeer or body slip situation.

A further aspect of the present invention provides a computer program comprising computer program code adapted to perform all of the above steps when the program is run on a computer.

Another aspect of the present invention provides a computer program according to the above, embodied on a computer readable medium.

In order that the present invention may be more readily understood, embodiments thereof will now be described, by way of example, with reference to the accompanying drawings, in which:
Figure 1 is a schematic view of a vehicle in an urban environment; and
Figure 2 is a schematic view of components of a decision-making process for use with the systems embodying the present invention.

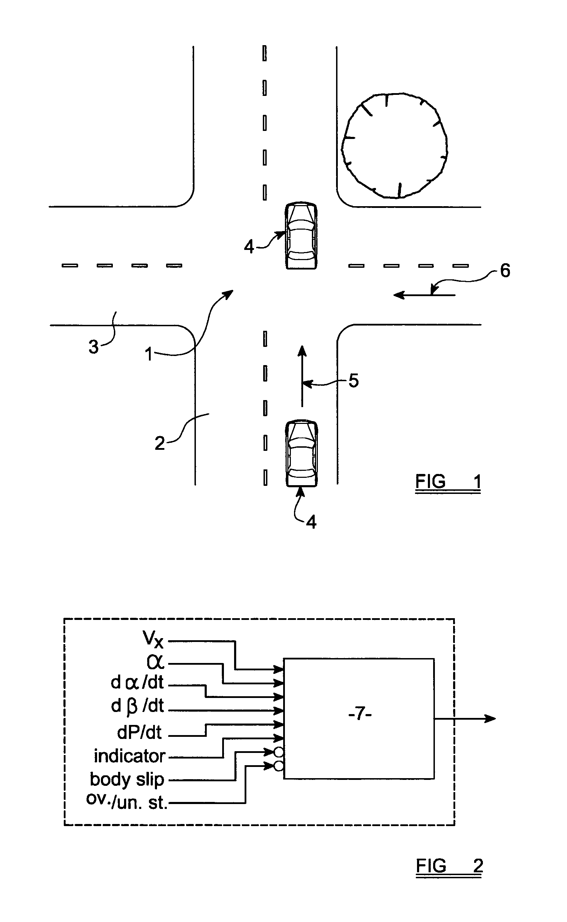

Referring firstly to figure 1, an intersection 1 between a first road 2 and a second road 3, which cross one another substantially at right angles, is shown. The intersection 1 may be of any type, and the flow of traffic may be determined by one or more traffic lights or other signals, one of the roads 2,3 may have priority over the other, or neither of the roads 2,3 may be allocated overall priority and drivers approaching the intersection 1 from any direction may simply be allowed to cross the intersection 1 when they deem it safe to proceed.

A car 4, is travelling along the first road 2 towards the intersection 1, but has not yet reached the intersection 1. The direction of travel of the car is indicated in figure 1 by an arrow 5.

At a later time, the vehicle 4 crosses the intersection 1, and during the crossing of the intersection 1 the vehicle 4 will be positioned near the point at which vehicles approaching the intersection along the second road 3 will enter the intersection 1. The direction of travel along which some vehicles will enter the intersection 1 along the second road 2 is shown in figure 1 by an arrow 6.

As is known in the art, the vehicle 4 is provided with a number of sensors which are adapted to sense position, movement and control of the vehicle 4. The sensors may include a set of accelerometers to mesure acceleration of the vehicle in the longitudinal, lateral and vertical directions, and the speed of the vehicle 4 in various directions can also be determined from outputs of these accelerometers. The accelerometers may also include a yaw sensor, to mention the yaw rate of the vehicle. A GPS or other positioning system is provided to determine the position of the vehicle on the Earth's surface. Sensors are further provided to detect use of the vehicle's indicators, the angle of the steering wheel, the angle of the throttle pedal, and the brake pressure that is applied to the brake pedal of the vehicle 4. the vehicle 4 also comprises one or more imaging devices, which may for example comprise a camera or a radar/lidar system, to form images of the surroundings of the vehicle 4.

Side impact sensors are mounted along the sides of the vehicle 4, and are each configured to output a signal which is indicative of the lateral acceleration of the sensor.

The vehicle 4 also comprises one or more safety devices, such as a side air-bag, to protect a vehicle occupant in the event of a side impact. The control unit, which comprises one or more processors, interprets signals output by the various sensors and determines whether the safety devices should be triggered.

Research shows that, when a vehicle is traversing an intersection, the likelihood of a harmful side impact occurring is relatively high. It will be understood that this is because the vehicle presents one or both of its side surfaces to the normal direction of travel of other vehicles, which may be travelling at significant speed as they enter the intersection.

Using the information derived from some or all of the sensors of the vehicle 4, it is possible to make a determination as to whether the vehicle 4 is traversing an intersection.

In preferred embodiments of the invention, the GPS or other positioning system is provided in conjunction with a map, which includes details of the locations of various intersections. The appropriate map data may be stored in an on-board memory unit, but may also be received continuously, or updated, by a transmission which is received by the vehicle 4.

It will be understood that, by comparing the position of the vehicle 4 as determined by the positioning system, with the map data, it will be possible to determine that the vehicle 4 is traversing an intersection, or is about to do so.

Alternatively, or in conjunction with the technique described above, it is possible to make a determination as to whether the vehicle 4 is traversing an intersection from the sensed movement and control of the vehicle. For instance, intersections are generally encountered in urban-type environments, and output from the sensors may be used to determine whether the vehicle is in such an environment. Urban driving is generally characterised by particular ranges of throttle rate, braking pressure rate, speed variation, use of indicators, steering wheel angle and change of steering wheel angle, and using information relating to some or all of these quantities it is possible to make a determination as to whether the vehicle is in an urban environment.

A determination that the vehicle is in an urban environment, or crossing an intersection, will not be made if it is determined that the vehicle is understeering or oversteering, or that body slip (i.e. a lateral skid) of the vehicle is occurring. If any of these situations appear to be the case, the likelihood is that the vehicle is not traversing an intersection.

Further, a determination that the vehicle is in an urban environment, and/or crossing an intersection, may be reached only if the speed of the vehicle falls within a range which is indicative of urban driving. For instance, such a determination will only be made if the speed of the vehicle is below 40 km an hour. In more preferred embodiments, a lower speed threshold is around 2 to 5 km an hour, with the upper speed threshold being around 30 to 40 km an hour.

Vehicle safety systems embodying the present invention comprise a default deployment algorithm which is adapted to interpret data from the various vehicle sensors and to make a determination as to whether one or more safety devices should be deployed to protect an occupants of the vehicle from a side impact. Depending on the type of a particular safety device, the algorithm may also determine the mode in which the safety device is activated. This default deployment algorithm may be similar to conventional deployment algorithms.

The vehicle's control unit also comprises at least one further deployment algorithm, which is used when it is determined that the likelihood of the vehicles being involved in a harmful side impact is high.

When a safety system is deployed in accordance with a deployment algorithm which uses information from impact sensors which are mounted at the side of a vehicle, the rate of lateral acceleration of the sensor is generally taken into account in determining the severity of a side impact. This lateral acceleration will be compared against a threshold, and one or more safety systems will be deployed if the lateral acceleration exceeds a preset threshold.

As described above, this threshold must be set so that the safety systems will not be triggered by any inappropriate events, for instance the violent slamming of the door of the vehicle, or a low impact crash that is unlikely to cause harm to any occupants of the vehicle.

Shortly after the initiation of a crash (for example, after a few milliseconds) it is difficult to discriminate the output of an impact sensor from a real crash from the sensor output from a less serious event (such as the slamming of a door of the vehicle, or a hammer blow), or the impact of light objects, such as pedestrians or cyclists, because the integrated acceleration of a side impact sensor for all of these cases would be of roughly of the same magnitude. In the latter cases, safety devices to protect occupants should not be activated, and to avoid the accidental activation of these systems deployment algorithms generally wait until a later time, at which the integrated acceleration from a serious impact will be relatively easy to distinguish from the integrated acceleration arising from a less serious event.

It will be appreciated, however, that delaying the activation of safety devices in the event of a real crash is undesirable.

If it is determined that, however, that the vehicle 4 is in a situation where a harmful side impact appears to be likely, it is possible to lower the threshold against which the lateral acceleration of an impact sensor is compared, as the benefit obtained from early triggering of safety system will outweigh the potential risk of the safety systems being triggered erroneously.

Referring again to figure 1, if the vehicle 4 is traversing the intersection I, there is a relatively high risk that another vehicle will enter the intersection 1 whilst travelling along on the second road 3, and strike a side surface of the vehicle 4.

Under these circumstance, the risk of events such as the slamming of a door of the vehicle, which might lead to a erroneous triggering of the safety systems, is very small.

Under such circumstances, therefore, a further deployment algorithm may be used by the vehicles control unit. When the further deployment algorithm is used, the threshold of sideways acceleration of an impact sensor that must be met in order for the safety system to be triggered is lowered.

In preferred embodiments of the invention, the further deployment algorithm is adopted in situations where it is determined that the vehicle is traversing an intersection, or is about to traverse an intersection.

As described above, in preferred embodiments this determination is made with reference to a combination of data received from the vehicle's positioning system, and stored map data.

Alternatively, or in conjunction, data from the one or more imaging devices may be used to recognise that the vehicle 4 is traversing or approaching an intersection, and a skilled person will appreciate how this may be achieved. For example, images gathered may be compared against templates derived from stored images taken as a vehicles traverses or approaches an intersection.

Data relating to the movement and/or control of the vehicle 4 may also be used, as an alternative to, or in conjunction with, the techniques described above. With reference to figure 2, a schematic view of a decision-making process to decide which deployment algorithm to employ is shown.

The vehicle's control unit comprises an intersection evaluation unit 7, which receives input relating to the longitudinal speed of the vehicle Vₓ, the steering wheel angle α, the rate of change of the steering wheel angle, dα/dt, the rate of change dβ/dt of the throttle angle α, the rate of change dP/dt of the brake pressure, information relating to the use of the vehicle's indicators, and information relating to the likelihood (as determined by vehicle sensors) of the vehicle 4 undergoing a body slip, understeer, or oversteer situations.

As described above, this information will be analysed by the intersection evaluation unit 7, which will make a determination as to whether it is likely that the vehicle is traversing an intersection, or is about to traverse an intersection. In preferred embodiments, this will be achieved by analysing the information to determine whether the behaviour of the vehicle corresponds to typical urban driving.

As discussed above, when the further deployment algorithm is used, the threshold against which the lateral acceleration experienced by a side-mounted impact sensor is compared is lowered so that in effect the further deployment algorithm is more sensitive to potential side impacts, with the result that safety systems will be activated at an earlier stage in the event of a real side impact.

If it is determined that the vehicle 4 is traversing, or is about to traverse, an intersection, but no side impact occurs and the vehicle 4 continues to a stage where it no longer appears likely that the vehicle is in the vicinity of an intersection, the conditions described above will no longer be met, and it will be determined that the vehicle 4 is no longer in a situation where a harmful side impact is likely. In this case, the default deployment algorithm for side impact safety systems will once again be used.

In the embodiments described above, the further deployment algorithm is made more sensitive to potential side impacts by reducing the threshold against which the lateral acceleration of a side impacts sensor is compared. However, the invention is not limited to this, and any appropriate threshold or criterion for assessing the likelihood that a side impact is occurring, or is likely to occur, may be reduced or adapted to make the further deployment algorithm more sensitive to side impacts. In general, when it is determined that the vehicle is entering a crossing and not a driving lane, or is about to do so, the further deployment algorithm will be employed.

The intersection described above is the crossing of two roads substantially at right angles to one another. However, it should be appreciated that an intersection may comprise any junction at which vehicles may approach one another non-parallel directions. Further examples include roundabouts, T-junctions and points at which slip-roads meet more major roads, although of course the invention is not limited to these examples. Whilst the above discussion is directed primarily to side impacts, it will be understood that there are other types of impacts whose likelihood of occurence is increased if the lane in which a vehicle is travelling crosses or merges with another driving lane. These types of impact include front/side and rear/side impacts.

It will be understood that embodiments of the present invention will provide a flexible system for triggering side-impact safety systems in the most appropriate manner depending on the circumstances, which may lead to a significant improvement in passenger safety.

When used in this specification and claims, the terms "comprises" and "comprising" and variations thereof mean that the specified features, steps or integers arc included. The terms are not to be interpreted to exclude the presence of other features, steps or components.

## Claims

1. A vehicle safety system comprising:
at least one occupant safety device for protecting an occupant of the vehicle (4) in the event of an impact of a predetermined type; and
a control unit operable to receive information from one or more vehicle sensors and to provide a trigger signal to activate the occupant safety device, wherein:
under normal driving conditions, a default deployment algorithm is used by the control unit to determine whether the trigger signal should be generated; and
if it is determined that the vehicle is entering or crossing another driving lane (3), or is about to do so, the control unit employs a further deployment algorithm to determine whether the trigger signal should be generated, the further deployment algorithm being adapted to cause the trigger signal to be generated a shorter time after the initiation of an impact of the predetermined type than is the case for the default deployment algorithm; the sensors include sensors for measuring movement and/or control of the vehicle (4), and the control unit is operable to make a determination, from data output from these sensors, as to whether the vehicle (4) is entering or crossing another driving lane (3), or is about to do so; the sensors operable to detect at least one of steering wheel angle, longitudinal speed, throttle angle, brake pressure and indicator status, or are able to determine whether the vehicle (4) is involved in an understeer, oversteer or body slip situation; **characterised in that** a determination will not be made that the vehicle (4) is entering or crossing another driving lane (3) if it is determined that the vehicle (4) is undergoing an oversteer, understeer or body slip situation.

2. A system according to claim 1, wherein the occupant safety device is for protecting an occupant in the event of a side impact.

3. A system according to claim 1 or 2, wherein the further deployment algorithm is employed if it is determined the other driving lane (3) crosses the driving lane (2) along which the vehicle (1) is travelling, or if it is determined that the driving lane (2) along which the vehicle is travelling is entering the other driving lane (3).

4. A system according to any preceding claims, in which the vehicle sensors include a positioning system, and the positioning system is preferably provided in conjunction with stored map data which contains information relating to the location of one or more mergings or crossing of driving lanes (2,3).

5. A system according to any preceding claim, wherein the sensors include an imaging device, and the control unit is operable to recognise, from data gathered by the imaging device, that the vehicle is entering or crossing another driving lane (3), or is about to do so, and the imaging device preferably comprises a camera.

6. A system according to claim 1, wherein it will only be determined that the vehicle is entering or crossing another driving lane (3), or is about to do so, if the longitudinal speed (5) of the vehicle is between upper and lower speed thresholds.

7. A system according to claim 6, wherein the lower speed threshold is about 5 to 10 km an hour, or the upper speed threshold is about 40 to 70 km an hour, or is about 50 km an hour.

8. A system according to any preceding claim, wherein the trigger signal is generated if a preset threshold is exceeded by a parameter derived from the impact sensor, the threshold being lowered or adapted in the further deployment algorithm, when compared to the default deployment algorithm, so that the further deployment algorithm is more sensitive to impacts.

9. A system according to claim 8, wherein the impact sensor is an accelerometer, and the parameter derived from the sensor is integrated acceleration of the sensor.

10. A method of controlling an occupant safety device of a vehicle (4) for protecting an occupant of the vehicle (4) in the event of an impact of a predetermined type, the method comprising the steps of:
receiving information from one or more vehicle sensors; and
analysing the signals in accordance with a deployment algorithm and providing a trigger signal to activate the occupant safety device if it is determined that activation of the safety device is necessary, wherein:
under normal driving conditions, a default deployment algorithm is employed to determine whether the trigger signal should be generated;
if it is determined that the vehicle is entering or crossing another driving lane (3), or is about to do so, employing a further deployment algorithm to determine whether the trigger signal should be generated, the farther deployment algorithm being adapted to cause the trigger signal to be generated a shorter time after the initiation of an impact of the predetermined type than is the case for the default deployment algorithm; providing sensors for measuring movement and/or control of the vehicle (4), and a control unit is operable to make a determination, from data output from these sensors, as to whether the vehicle (4) is entering or crossing another driving lane (3), or is about to do so; the sensors operable to detect at least one of steering wheel angle, longitudinal speed, throttle angle, brake pressure and indicator status, or are able to determine whether the vehicle (4) is involved in an understeer, oversteer or body slip situation; **characterised in that** the step of determining will not be made that the vehicle (4) is entering or crossing another driving lane (3) if it is determined that the vehicle (4) is undergoing an oversteer, understeer or body slip situation.

11. A computer program comprising computer program code adapted to perform all of the steps of claim 10 when the program is ran on a computer.

12. A computer program according to claim 11, embodied on a computer readable medium.

## Patentansprüche

1. Fahrzeugsicherheitssystem, umfassend:
mindestens eine Insassensicherheitsvorrichtung zum Schützen eines Insassen des Fahrzeugs (4) im Fall eines Aufpralls eines vorgegebenen Typs; und
eine Steuereinheit, die dazu funktionsfähig ist, Information von einem oder mehreren Fahrzeugsensoren zu empfangen und ein Auslösesignal bereitzustellen, um die Insassensicherheitsvorrichtung zu aktivieren, wobei:
unter normalen Fahrbedingungen ein Standardeinsatzalgorithmus von der Steuereinheit verwendet wird, um zu bestimmen, ob das Auslösesignal erzeugt werden sollte; und
wenn bestimmt wird, dass das Fahrzeug auf eine andere Fahrbahn (3) fährt oder sie kreuzt oder dies gleich tun wird, die Steuereinheit einen weiteren Einsatzalgorithmus verwendet, um zu bestimmen, ob das Auslösesignal erzeugt werden sollte, wobei der weitere Einsatzalgorithmus dazu ausgelegt ist, zu bewirken, dass das Auslösesignal eine kürzere Zeit nach dem Beginn eines Aufpralls des vorgegebenen Typs erzeugt werden sollte, als es der Fall für den Standardeinsatzalgorithmus ist; die Sensoren Sensoren zum Messen der Bewegung und/oder Steuerung des Fahrzeugs (4) beinhalten, und die Steuereinheit dazu funktionsfähig ist, aus einer Datenausgabe aus diesen Sensoren eine Bestimmung vorzunehmen, ob das Fahrzeug (4) auf eine andere Fahrbahn (3) fährt oder sie kreuzt oder dies gleich tun wird; wobei die Sensoren dazu funktionsfähig sind, einen Lenkradwinkel und/oder die Längsgeschwindigkeit und/oder den Drosselwinkel und/oder den Bremsdruck und/oder den Blinkerstatus zu erfassen, oder imstande sind, zu bestimmen, ob das Fahrzeug (4) an einer Untersteuerungs-, Übersteuerungs- oder Karosserieschlupfsituation beteiligt ist; **dadurch gekennzeichnet, dass** eine Bestimmung nicht erfolgt, dass das Fahrzeug (4) auf eine andere Fahrbahn (3) fährt oder sie kreuzt, wenn bestimmt wird, dass das Fahrzeug (4) einer Übersteuerungs-, Untersteuerungs- oder Karosserieschlupfsituation ausgesetzt ist.

2. System nach Anspruch 1, wobei die Insassensicherheitsvorrichtung zum Schützen eines Insassen im Fall eines Seitenaufpralls dient.

3. System nach Anspruch 1 oder 2, wobei der weitere Einsatzalgorithmus verwendet wird, wenn bestimmt wird, dass die andere Fahrbahn (3) die Fahrbahn (2) kreuzt, auf welcher sich das Fahrzeug (1) bewegt, oder wenn bestimmt wird, dass die Fahrbahn (2), auf welcher sich das Fahrzeug bewegt, in die andere Fahrbahn (3) führt.

4. System nach irgendeinem vorhergehenden Anspruch, wobei die Fahrzeugsensoren ein Positionierungssystem beinhalten und das Positionierungssystem bevorzugt in Verbindung mit gespeicherten Kartendaten bereitgestellt ist, welche Information enthalten, die die Stelle von einer oder mehreren Verschmelzungen oder Kreuzung von Fahrbahnen (2, 3) betrifft.

5. System nach irgendeinem vorhergehenden Anspruch, wobei die Sensoren eine Abbildungsvorrichtung beinhalten und die Steuereinheit dazu funktionsfähig ist, aus von der Abbildungsvorrichtung gesammelten Daten zu erkennen, dass das Fahrzeug auf eine andere Fahrbahn (3) fährt oder sie kreuzt oder dies gleich tun wird, und die Abbildungsvorrichtung bevorzugt eine Kamera umfasst.

6. System nach Anspruch 1, wobei nur bestimmt wird, dass das Fahrzeug auf eine andere Fahrbahn (3) fährt oder sie kreuzt oder dies gleich tun wird, wenn die Längsgeschwindigkeit (5) des Fahrzeugs zwischen einem oberen und einem unteren Geschwindigkeitsschwellwert liegt.

7. System nach Anspruch 6, wobei der untere Geschwindigkeitsschwellwert ungefähr 5 bis 10 Stundenkilometer oder der obere Geschwindigkeitsschwellwert ungefähr 40 bis 70 Stundenkilimeter oder ungefähr 50 Stundenkilometer beträgt.

8. System nach irgendeinem vorhergehenden Anspruch, wobei das Auslösesignal erzeugt wird, wenn ein voreingestellter Schwellwert von einem Parameter überschritten wird, der aus dem Aufprallsensor abgeleitet ist, wobei der Schwellwert gesenkt oder in dem weiteren Einsatzalgorithmus angepasst wird, wenn er mit dem Standardeinsatzalgorithmus verglichen wird, so dass der weitere Einsatzalgorithmus empfindlicher auf Aufpralle reagiert.

9. System nach Anspruch 8, wobei der Aufprallsensor ein Akzelerometer ist und der aus dem Sensor abgeleitete Parameter die integrierte Akzeleration des Sensors ist.

10. Verfahren zum Steuern einer Insassensicherheitsvorrichtung eines Fahrzeugs (4) zum Schützen eines Insassen des Fahrzeugs (4) im Fall eines Aufpralls eines vorgegebenen Typs, wobei das Verfahren die folgenden Schritte umfasst Empfangen von Information von einem oder mehreren Fahrzeugsensoren; und
Analysieren der Signale gemäß einem Einsatzalgorithmus und Bereitstellen eines Auslösesignals zum Aktivieren der Insassensicherheitsvorrichtung, wenn bestimmt wird, dass die Aktivierung der Sicherheitsvorrichtung notwendig ist, wobei:
unter normalen Fahrbedingungen ein Standardeinsatzalgorithmus verwendet wird, um zu bestimmen, ob das Auslösesignal erzeugt werden sollte;
wenn bestimmt wird, dass das Fahrzeug auf eine andere Fahrbahn (3) fährt oder sie kreuzt oder dies gleich tun wird, Verwenden eines weiteren Einsatzalgorithmus, um zu bestimmen, ob das Auslösesignal erzeugt werden sollte, wobei der weitere Einsatzalgorithmus dazu ausgelegt ist, zu bewirken, dass das Auslösesignal eine kürzere Zeit nach dem Beginn eines Aufpralls des vorgegebenen Typs erzeugt werden sollte, als es der Fall für den Standardeinsatzalgorithmus ist; Bereitstellen von Sensoren zum Messen der Bewegung und/oder Steuerung des Fahrzeugs (4), und eine Steuereinheit dazu funktionsfähig ist, aus einer Datenausgabe aus diesen Sensoren eine Bestimmung vorzunehmen, ob das Fahrzeug (4) auf eine andere Fahrbahn (3) fährt oder sie kreuzt oder dies gleich tun wird; wobei die Sensoren dazu funktionsfähig sind, einen Lenkradwinkel und/oder die Längsgeschwindigkeit und/oder den Drosselwinkel und/oder den Bremsdruck und/oder den Blinkerstatus zu erfassen, oder imstande sind, zu bestimmen, ob das Fahrzeug (4) an einer Untersteuerungs-, Übersteuerungs- oder Karosserieschlupfsituation beteiligt ist; **dadurch gekennzeichnet, dass** der Schritt der Bestimmung nicht erfolgt, dass das Fahrzeug (4) auf eine andere Fahrbahn (3) fährt oder sie kreuzt, wenn bestimmt wird, dass das Fahrzeug (4) einer Übersteuerungs-, Untersteuerungs- oder Karosserieschlupfsituation ausgesetzt ist.

11. Computerprogramm, das einen Computerprogrammcode umfasst, der dazu ausgelegt ist, alle Schritte nach Anspruch 10 durchzuführen, wenn das Programm auf einem Computer laufen gelassen wird.

12. Computerprogramm nach Anspruch 11, das auf einem computerlesbaren Medium enthalten ist.

## Revendications

1. Système de sécurité pour véhicule, comprenant :
au moins un dispositif de sécurité pour occupant destiné à protéger un occupant du véhicule (4) en cas de choc d'un type prédéterminé ; et
et une unité de commande servant à recevoir des informations d'un ou plusieurs capteurs de véhicule et à fournir un signal de déclenchement de façon à activer le dispositif de sécurité pour occupant, dans lequel :
dans des conditions de conduite normales, un algorithme de déploiement par défaut est utilisé par l'unité de commande pour déterminer si le signal de déclenchement doit être généré ; et
s'il est déterminé que le véhicule rejoint ou traverse une autre voie de circulation (3), ou est sur le point de le faire, l'unité de commande utilise un autre algorithme de déploiement pour déterminer si le signal de déclenchement doit être généré, l'autre algorithme de déploiement étant adapté pour faire en sorte que le signal de déclenchement soit généré un temps plus court après le début d'un choc du type prédéterminé que dans le cas de l'algorithme de déploiement par défaut ; les capteurs incluent des capteurs de mesure du mouvement et/ou de contrôle du véhicule (4), et l'unité de commande sert à déterminer, sur la base de données de sortie fournies par ces capteurs, si le véhicule (4) rejoint ou traverse une autre voie de circulation (3), ou est sur le point de le faire ; les capteurs servent à détecter au moins un paramètre parmi l'angle de braquage du volant, la vitesse longitudinale, l'angle du papillon des gaz, la pression de freinage et l'état des voyants, ou servent à déterminer si le véhicule (4) est impliqué dans une situation de sous-virage, de survirage ou de glissement de la carrosserie ; **caractérisé en ce que** la détermination de si le véhicule (4) rejoint ou traverse une autre voie de circulation (3) ne sera pas réalisée s'il est déterminé que le véhicule (4) est dans une situation de survirage, de sous-virage ou de glissement de la carrosserie.

2. Système selon la revendication 1, dans lequel le dispositif de sécurité pour occupant est destiné à protéger un occupant en cas de choc latéral.

3. Système selon la revendication 1 ou 2, dans lequel l'autre algorithme de déploiement est utilisé s'il est déterminé que l'autre voie de circulation (3) traverse la voie de circulation (2) sur laquelle circule le véhicule (1), ou s'il est déterminé que la voie de circulation (2) sur laquelle circule le véhicule rejoint l'autre voie de circulation (3).

4. Système selon l'une quelconque des revendications précédentes, dans lequel les capteurs de véhicule comportent un système de positionnement, et le système de positionnement est de préférence fourni conjointement avec des données cartographiques stockées qui contiennent des informations sur la localisation d'un ou plusieurs carrefours ou convergences de voies de circulation (2, 3).

5. Système selon l'une quelconque des revendications précédentes, dans lequel les capteurs comprennent un dispositif d'image, et l'unité de commande sert à reconnaître, sur la base des données obtenues par le dispositif d'image, que le véhicule rejoint ou traverse une autre voie de circulation (3), ou est sur le point de le faire, et le dispositif d'image comprend de préférence une caméra.

6. Système selon la revendication 1, dans lequel il sera déterminé que le véhicule rejoint ou traverse une autre voie de circulation (3), ou est sur le point de le faire, uniquement si la vitesse longitudinale (5) du véhicule est comprise entre des seuils supérieur et inférieur de vitesse.

7. Système selon la revendication 6, dans lequel le seuil inférieur de vitesse est d'environ 5 à 10 km par heure, ou le seuil supérieur de vitesse est d'environ 40 à 70 km par heure, ou est d'environ 50 km par heure.

8. Système selon l'une quelconque des revendications précédentes, dans lequel le signal de déclenchement est généré si un seuil prédéfini est dépassé par un paramètre déterminé par le capteur de choc, le seuil étant diminué ou adapté dans l'autre algorithme de déploiement par comparaison avec l'algorithme de déploiement par défaut, de façon à ce que l'autre algorithme de déploiement soit plus sensible aux chocs.

9. Système selon la revendication 8, dans lequel le capteur de choc est un accéléromètre, et le paramètre déterminé par le capteur est l'accélération intégrée du capteur.

10. Procédé de contrôle d'un dispositif de sécurité pour occupant d'un véhicule (4) destiné à protéger un occupant du véhicule (4) en cas de choc d'un type prédéterminé, le procédé comprenant les étapes consistant à :
recevoir des informations d'un ou plusieurs capteurs de véhicule ; et
analyser les signaux selon un algorithme déploiement et fournir un signal de déclenchement afin d'activer le dispositif de sécurité pour occupant s'il est déterminé que l'activation du dispositif de sécurité est nécessaire, dans lequel :
dans des conditions de conduite normales, un algorithme de déploiement par défaut est utilisé pour déterminer si le signal de déclenchement doit être généré ;
s'il est déterminé que le véhicule rejoint ou traverse une autre voie de circulation (3), ou est sur le point de le faire, utiliser un autre algorithme de déploiement pour déterminer si le signal de déclenchement doit être généré, l'autre algorithme de déploiement étant adapté pour faire en sorte que le signal de déclenchement soit généré un temps plus court après le début d'un choc du type prédéterminé que dans le cas de l'algorithme de déploiement par défaut ; fournir des capteurs de mesure du mouvement et/ou de contrôle du véhicule (4), et une unité de commande sert à déterminer, sur la base de données de sortie fournies par ces capteurs, si le véhicule (4) rejoint ou traverse une autre voie de circulation (3), ou est sur le point de le faire ; les capteurs servent à détecter au moins un paramètre parmi l'angle de braquage du volant, la vitesse longitudinale, l'angle du papillon des gaz, la pression de freinage et l'état des voyants, ou servent à déterminer si le véhicule (4) est impliqué dans une situation de sous-virage, de survirage ou de glissement de la carrosserie ; **caractérisé en ce que** l'étape consistant à déterminer si le véhicule (4) rejoint ou traverse une autre voie de circulation (3) ne sera pas réalisée s'il est déterminé que le véhicule (4) est dans une situation de survirage, de sous-virage ou de glissement de la carrosserie.

11. Programme informatique comprenant un code de programme informatique adapté pour réaliser toutes les étapes de la revendication 10 lorsque le programme est exécuté sur un ordinateur.

12. Programme informatique selon la revendication 11, intégré sur un support lisible par un ordinateur.
